# DEMANDE DE BREVET EUROPEEN

(11) **EP 1 710 939 A1**
(43) Date de publication de la demande: **11.10.2006**
(21) Numéro de dépôt: 06112288.3
(22) Date de dépôt: 06.04.2006
(51) Int. Cl.: H04J 14/02

(54) **Réseau de communication (D)WDM à sources de lumière protégées**

(30) Priorité: 07.04.2005 FR 0550895
(71) Demandeur: ALCATEL, 75008 Paris (FR)
(72) Inventeur: Zami, Thierry, 91300, MASSY (FR); Noirie, Ludovic, 91620, NOZAY (FR)
(74) Mandataire: Sciaux, Edmond

(57) **Abrégé**

Un noeud de communication (Nᵢ), pour un réseau optique à multiplexage de longueurs d'onde, comprend, d'une part, des moyens de modulation locaux (MOD) chargés de moduler au moins une lumière de longueur d'onde choisie, délivrée par une source (S1-S4), de manière à délivrer des signaux optiques modulés, et d'autre part, des moyens de couplage chargés de coupler les moyens de modulation locaux (MOD) i) à une première portion de fibre optique (PF1) dans laquelle circule au moins une lumière d'une longueur d'onde choisie, délivrée par une source appartenant à un premier noeud distant du réseau, et ii) à au moins une autre source délivrant au moins une lumière présentant cette longueur d'onde choisie.

## Description

L'invention concerne le domaine des réseaux optiques à multiplexage de longueurs d'onde (ou (D)WDM pour « (Dense) Wavelength Division Multiplexing »), et plus particulièrement la flexibilité au sein de tels réseaux.

Dans les réseaux précités, des multiplex spectraux de signaux optiques, représentatifs de données à transmettre, circulent à l'intérieur de fibres optiques unidirectionnelles ou bidirectionnelles. Ces multiplex spectraux sont construits par les noeuds (ou stations) de communication qui sont raccordé(e)s aux fibres optiques du réseau.

Comme le sait l'homme de l'art, ces multiplex spectraux sont élaborés à partir de lumières (ou porteuses optiques) de longueurs d'onde différentes modulées avec les signaux à transmettre. Ces lumières (ou porteuses optiques) sont fournies par des sources de lumière, telles que des lasers accordables en longueur d'onde ou des batteries de lasers à longueurs d'onde fixes. Généralement, chaque noeud dispose de sa (ou ses) propre(s) source(s) de lumière.

Afin de limiter les coûts, il est possible d'implanter les sources dans l'un des noeuds du réseau et de distribuer les lumières de longueurs d'onde différentes aux autres noeuds du réseau qui n'ont plus alors qu'à les moduler avec les signaux à transmettre. Cette solution est notamment décrite dans le document de N. Takachio et al. « 12.5-GHz spaced super-dense WDM ring network handling 256 wavelengths with tapped-type OADMs », Paper WW2, OFC 2002, p.349-350, ou dans le document de P.P. lannone et al. « A 160 km transparent metro WDM ring network featuring cascaded erbium-doped waveguide amplifiers », Paper WW3, OFC 2001.

L'utilisation de lasers accordables en longueur d'onde n'est pas optimale en terme de coût.

La sélection de longueurs d'onde (au moyen de batteries de lasers à longueurs d'onde fixes) est efficace à condition que plusieurs modules de transmission partagent des batteries de lasers à longueurs d'onde fixes implantées de façon centralisée dans un (ou des) noeuds. En raison des pertes d'insertion au niveau des modulateurs optiques présents dans les noeuds il est indispensable d'implanter en ligne de nombreux amplificateurs optiques afin de maintenir un niveau de puissance optique suffisamment important dans tout le réseau, ce qui augmente notablement les coûts.

Par ailleurs, quel que soit le type de source envisagé et le mode d'acheminement des lumières de longueurs d'onde différentes au niveau des modulateurs, il se pose le problème de la protection des sources. En effet, lorsqu'une source n'est plus en mesure de délivrer l'une au moins des lumières qui sont utilisées par le réseau, les données qu'elle(s) doi(ven)t véhiculer ne peuvent plus être transmises et peuvent être perdues. Pour éviter que cela ne se produise, les sources doivent être protégées. Pour ce faire, il a été proposé d'associer localement à chaque source une source de protection identique. Mais, cela s'avère particulièrement onéreux et de surcroît encombrant.

L'invention a pour but d'améliorer la situation.

Elle propose à cet effet un noeud de communication pour un réseau optique à multiplexage de longueurs d'onde, ce noeud comprenant des moyens de modulation locaux capables de moduler au moins une lumière de longueur d'onde choisie, délivrée par une source, afin de délivrer des signaux optiques modulés.

Ce noeud de communication se caractérise par le fait qu'il comprend des moyens de couplage chargés de coupler les moyens de modulation locaux, d'une part, à une première portion de fibre optique dans laquelle circule au moins une lumière d'une longueur d'onde choisie, délivrée par une source appartenant à un premier noeud distant du réseau, et d'autre part, à au moins une autre source délivrant au moins une lumière présentant cette longueur d'onde choisie.

De la sorte, les sources sont protégées, sans qu'il faille utiliser des amplificateurs optiques en ligne.

Le noeud de communication selon l'invention peut comporter d'autres caractéristiques qui peuvent être prises séparément ou en combinaison, et notamment :
- il peut comprendre au moins une source de lumière locale constituant l'autre source. Dans ce cas, ses moyens de couplage sont chargés de coupler ses moyens de modulation soit à la source de lumière locale lorsqu'elle fonctionne normalement, soit à la première portion de fibre optique lorsque la source de lumière locale ne fonctionne pas ;
   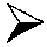 ses moyens de couplage peuvent être chargés de coupler chaque source de lumière locale à au moins une seconde portion de fibre optique couplée à un second noeud distant du réseau ;
      - il peut comprendre i) des premiers moyens de multiplexage raccordés à la première portion de fibre optique et chargés de délivrer sur au moins deux sorties des lumières présentant des longueurs d'onde différentes, ii) au moins deux sources de lumière locales agencées chacune sous la forme d'un laser mono-longueur d'onde délivrant sur une sortie une lumière présentant une longueur d'onde identique à l'une de celles présentées par les lumières délivrées sur les sorties des premiers moyens de multiplexage, et iii) des seconds moyens de multiplexage comprenant des entrées raccordées respectivement aux sorties des sources de lumière locales et une sortie raccordée à la seconde portion de fibre optique afin de l'alimenter en lumières multiplexées en longueurs d'onde. Dans ce cas, ses moyens de couplage peuvent par exemple comprendre des aiguilleurs dédiés chacun à l'aiguillage d'une lumière présentant une longueur d'onde et comprenant chacun une première entrée raccordée à l'une des sorties des premiers moyens de multiplexage, une seconde entrée raccordée à la sortie de la source de lumière locale délivrant une lumière présentant la même longueur d'onde que celle de la lumière parvenant au niveau de la première entrée, et au moins une sortie propre à être couplée à l'une ou l'autre des première et seconde entrées et raccordée aux moyens de modulation ;
         o ses moyens de modulation peuvent également comprendre une première partie dédiée à la modulation locale protégée et une seconde partie dédiée à la modulation locale non protégée. Dans ce cas, chaque aiguilleur peut par exemple comprendre une première sortie raccordée à l'une des entrées de la première partie des moyens de modulation et une seconde sortie raccordée à l'une des entrées de la seconde partie des moyens de modulation, les première et seconde sorties de chaque aiguilleur pouvant être raccordées à la première ou à la seconde entrée de cet aiguilleur ;
      - dans une première variante, il peut comprendre i) des moyens de multiplexage comprenant une entrée et au moins deux sorties raccordées aux moyens de modulation afin de les alimenter en lumières présentant des longueurs d'onde différentes, et ii) une source de lumière locale de type multi-longueurs d'onde délivrant des lumières multiplexées en longueurs d'onde sur une sortie raccordée notamment à la seconde portion de fibre optique. Dans ce cas, ses moyens de couplage comprennent un aiguilleur comprenant une première entrée raccordée à la première portion de fibre optique, une seconde entrée raccordée à la sortie de la source de lumière locale, et une sortie pouvant être raccordée à sa première ou à sa seconde entrée et raccordée à l'entrée des moyens de multiplexage pour l'alimenter en lumières multiplexées en longueurs d'onde ;
      - dans une deuxième variante, il peut comprendre i) des premiers moyens de multiplexage comprenant une entrée et au moins deux sorties raccordées à une première partie des moyens de modulation, dédiée à la modulation locale protégée, afin de l'alimenter en lumières présentant des longueurs d'onde différentes, ii) des seconds moyens de multiplexage comprenant une entrée et au moins deux sorties raccordées à une seconde partie des moyens de modulation, dédiée à la modulation locale non protégée, afin de l'alimenter en lumières présentant les longueurs d'onde différentes, et iii) une source de lumière locale de type multi-longueurs d'onde délivrant des lumières multiplexées en longueurs d'onde sur une sortie raccordée notamment à la seconde portion de fibre optique. Dans ce cas, ses moyens de couplage comprennent un aiguilleur comprenant une première entrée raccordée à la première portion de fibre optique, une seconde entrée raccordée à la sortie de la source de lumière locale, une première sortie raccordée à l'entrée des premiers moyens de multiplexage pour l'alimenter en lumières multiplexées en longueurs d'onde, et une seconde sortie raccordée à l'entrée des seconds moyens de multiplexage pour l'alimenter en lumières multiplexées en longueurs d'onde, les première et seconde sorties de l'aiguilleur pouvant être raccordées à sa première ou à sa seconde entrée ;
      - dans une troisième variante, il peut comprendre i) au moins deux sources de lumière locales agencées chacune sous la forme d'un laser mono-longueur d'onde délivrant sur une sortie une lumière présentant une unique longueur d'onde, ii) des premiers moyens de multiplexage comprenant des entrées raccordées respectivement aux sorties des sources de lumière locales et une sortie délivrant des lumières multiplexées en longueurs d'onde, et iii) des seconds moyens de multiplexage comprenant une entrée et des sorties raccordées aux moyens de modulation pour les alimenter en lumières démultiplexées présentant les mêmes longueurs d'onde que celles des lumières délivrées par les sources de lumière locales. Dans ce cas, ses moyens de couplage comprennent i) un premier coupleur comprenant une entrée raccordée à la sortie des premiers moyens de multiplexage, une première sortie raccordée à cette entrée et à la seconde portion de fibre optique, et une seconde sortie, ii) un second coupleur comprenant une entrée couplée à la seconde sortie du premier coupleur et de première et seconde sorties raccordées à cette entrée, iii) un circulateur comprenant une entrée/sortie raccordée à la première portion de fibre optique, une entrée raccordée à la première sortie du second coupleur et pouvant être couplée à cette entrée/sortie, et une sortie pouvant être couplée à cette entrée/sortie, et iv) un aiguilleur comprenant des première et seconde entrées raccordées respectivement à la seconde sortie du second coupleur et à la sortie du circulateur, et une sortie propre à être couplée à l'une ou l'autre de ses première et seconde entrées et raccordée à l'entrée des seconds moyens de multiplexage. On entend ici par « circulateur » un composant dont l'entrée est un port d'entrée monodirectionnel pouvant transmettre des signaux optiques à son entrée/sortie (qui est un port d'entrée/sortie bidirectionnel), et dont la sortie est un port de sortie monodirectionnel pouvant être alimenté en signaux optiques par son entrée/sortie ;
- dans une variante ses moyens de couplage peuvent être chargés de coupler les moyens de modulation locaux soit à la première portion de fibre optique lorsque la lumière délivrée par la source du premier noeud circule dedans, soit à une seconde portion de fibre optique dans laquelle circule au moins une lumière présentant la longueur d'onde choisie, délivrée par une source appartenant à un second noeud distant du réseau et constituant l'autre source, lorsque la lumière délivrée par la source du premier noeud ne circule pas dans la première portion de fibre optique ;
   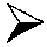 il peut comprendre des moyens de multiplexage comprenant une entrée et des sorties raccordées aux moyens de modulation pour les alimenter en lumières démultiplexées présentant des longueurs d'onde différentes. Dans ce cas, ses moyens de couplage comprennent i) un coupleur comprenant une entrée raccordée à la première portion de fibre optique et de première et seconde sorties raccordées à cette entrée, et ii) un circulateur comprenant une entrée/sortie raccordée à la seconde portion de fibre optique, une entrée raccordée à la première sortie du coupleur et pouvant être couplée à cette entrée/sortie, et une sortie pouvant être couplée à cette entrée/sortie, et iii) un aiguilleur comprenant des première et seconde entrées raccordées respectivement à la seconde sortie du coupleur et à la sortie du circulateur, et une sortie propre à être couplée à l'une ou l'autre de ses première et seconde entrées et raccordée à l'entrée des moyens de multiplexage ;
   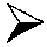 en variante, ses moyens de couplage peuvent comprendre i) un coupleur comprenant une entrée raccordée à la première portion de fibre optique et de première et seconde sorties raccordées à cette entrée, ii) un circulateur comprenant une entrée/sortie raccordée à la seconde portion de fibre optique, une entrée raccordée à la première sortie du coupleur et pouvant être couplée à cette entrée/sortie, et une sortie pouvant être couplée à cette entrée/sortie, iii) des premiers moyens de multiplexage comprenant une entrée raccordée à la seconde sortie du coupleur et des sorties propres à délivrer des lumières démultiplexées présentant des longueurs d'onde différentes, iv) des seconds moyens de multiplexage comprenant une entrée raccordée à la sortie du circulateur et des sorties propres à délivrer des lumières démultiplexées présentant des longueurs d'onde différentes, et v) des aiguilleurs dédiés chacun à l'aiguillage d'une lumière présentant une longueur d'onde et comprenant chacun une première entrée raccordée à l'une des sorties des premiers moyens de multiplexage, une seconde entrée raccordée à l'une des sorties des seconds moyens de multiplexage, et au moins une sortie propre à être couplée à l'une ou l'autre des première et seconde entrées et raccordée aux moyens de modulation.

L'invention propose également un réseau optique à multiplexage de longueurs d'onde, équipé d'au moins deux noeuds de communication du type de celui présenté ci-avant.

L'invention est particulièrement bien adaptée, bien que de façon non exclusive, aux réseaux optiques (D)WDM en anneau ou à structure en bus.

D'autres caractéristiques et avantages de l'invention apparaîtront à l'examen de la description détaillée ci-après, et des dessins annexés, sur lesquels :
- la figure 1 illustre de façon schématique et fonctionnelle un exemple de réalisation d'un réseau de communication en anneau raccordé à un réseau fédérateur,
- la figure 2 illustre de façon schématique un premier exemple de réalisation d'un noeud de communication selon l'invention,
- la figure 3 illustre de façon schématique un deuxième exemple de réalisation d'un noeud de communication selon l'invention,
- la figure 4 illustre de façon schématique une partie d'un réseau équipé d'une alternance de troisième et quatrième exemples de réalisation de noeud de communication selon l'invention,
- la figure 5 détaille schématiquement le troisième exemple de réalisation de noeud de communication de la figure 4,
- la figure 6 détaille schématiquement le quatrième exemple de réalisation de noeud de communication de la figure 4,
- la figure 7 illustre de façon schématique un cinquième exemple de réalisation d'un noeud de communication selon l'invention,
- la figure 8 illustre de façon schématique un sixième exemple de réalisation d'un noeud de communication selon l'invention, et
- la figure 9 illustre de façon schématique un septième exemple de réalisation d'un noeud de communication selon l'invention.

Les dessins annexés pourront non seulement servir à compléter l'invention, mais aussi contribuer à sa définition, le cas échéant.

L'invention a pour objet de permettre la flexibilité au sein de réseaux à multiplexage de longueurs d'onde (ou (D)WDM pour « (Dense) Wavelength Division Multiplexing »), grâce à la protection de ses sources de lumière, de façon à minimiser le recours à des amplificateurs optiques en ligne.

Dans ce qui suit, on considère à titre d'exemple non limitatif que le réseau optique est un réseau dit « en mode circuit », comme par exemple un réseau d'accès métropolitain de télécommunications. Mais, l'invention n'est pas limitée à cette seule application. Par ailleurs, le réseau optique peut être un réseau en anneau, mais cela n'est pas obligatoire. L'invention s'applique en effet à d'autres types de réseau optique, et notamment aux réseaux optiques à structure en bus.

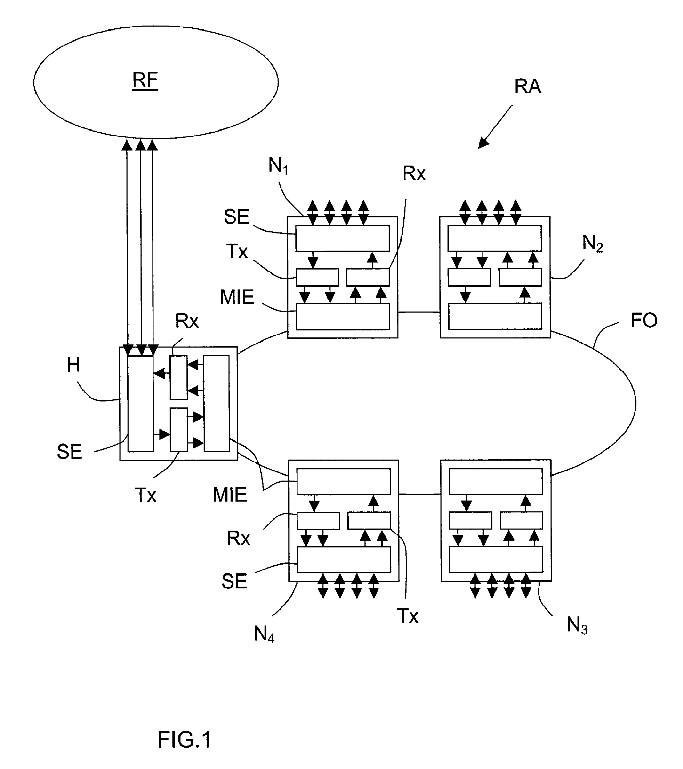

Sur la figure 1 se trouve représenté un exemple simplifié de réseau en anneau RA. Ce réseau RA comporte, classiquement, un noeud d'accès (ou « hub », ou encore point de présence) H, auquel est raccordée l'une au moins des deux extrémités d'au moins une fibre optique FO destinée à la transmission de données sous forme de multiplex spectraux de signaux optiques, et plusieurs noeuds (ou stations) de communication Nᵢ (ici, l'indice i est compris entre 1 et 4, mais il peut prendre n'importe quelle valeur supérieure ou égale à deux (2)), couplées optiquement à la (aux) fibre(s) FO au niveau d'équipements passifs d'insertion/extraction de multiplex, tels que des coupleurs optiques ou des multiplexeurs d'insertion/extraction (ou OADM pour « Optical Add and Drop Multiplexer »), éventuellement de type reconfigurable (R-OADM).

Le réseau en anneau RA est généralement raccordé à un autre réseau RF, dit « fédérateur » (ou « backbone »), via le noeud d'accès H.

Dans ce qui suit on considère à titre d'exemple illustratif que le réseau RA comporte une fibre optique de transmission FO dans laquelle circule le trafic montant et le trafic descendant. Le réseau RA peut également comporter une autre fibre optique de type bidirectionnel, dédiée à la protection du trafic en cas de défaillance survenue sur la fibre optique bidirectionnelle FO. Dans une variante, le réseau RA pourrait comporter une première fibre optique de transmission de type unidirectionnel, dédiée au trafic montant des noeuds Nᵢ vers le noeud d'accès H, et une seconde fibre optique de transmission de type unidirectionnel, dédiée au trafic descendant du noeud d'accès H vers les stations Nᵢ. Dans ce cas, les première et seconde fibres optiques peuvent être protégées par des première et seconde fibres optiques de protection.

Chaque noeud Nᵢ, y compris le noeud d'accès H, comprend :
- un multiplexeur d'insertion/extraction MIE chargé d'insérer dans et d'extraire de la fibre optique FO des multiplex spectraux,
- un commutateur de trafic SE auquel sont raccordés des terminaux d'utilisateurs (non représentés),
- au moins un module d'émission (ou transmission) Tx alimenté en données à transmettre par le commutateur de trafic SE et chargé de délivrer des multiplex spectraux de signaux optiques modulés de différentes longueurs d'onde (représentatifs des données) destinés à être insérés dans le trafic circulant dans la fibre optique FO par le multiplexeur d'insertion/extraction MIE, et
- au moins un module de réception Rx alimenté en multiplex spectraux de signaux optiques modulés de différentes longueurs d'onde (représentatifs de données) par le multiplexeur d'insertion/extraction MIE et chargés d'extraire les données de ces multiplex afin qu'elles soient transmises aux terminaux d'utilisateurs concernés par le commutateur de trafic SE.

L'invention ne portant pas sur les modules de réception Rx, ils ne seront dons pas décrits en détail ci-après.

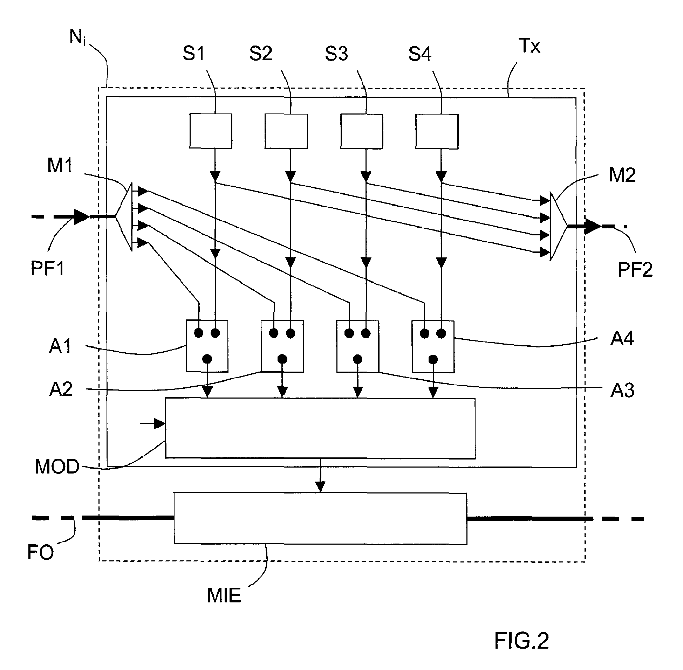

Il est important de noter que la définition donnée ci-avant d'un module d'émission (Tx) n'est pas celle habituellement utilisée. En effet, habituellement un module d'émission comprend un modulateur individuel et une unique source délivrant une lumière mono-longueur d'onde audit modulateur. Plusieurs modules d'émission sont donc généralement mis en parallèle, et les sorties de leurs modulateurs individuels respectifs alimentent un multiplexeur d'insertion/extraction MIE raccordé à une fibre optique. Ici, afin de simplifier les dessins, un module d'émission (Tx) comprend une source multi-longueurs d'onde ou plusieurs sources mono-longueur d'onde couplées chacune à un modulateur. Dans les figures 2 à 9 l'ensemble de modulateurs individuels apparaît sous la forme d'un seul bloc référencé MOD.

Par ailleurs, la définition donnée ci-avant d'un module de réception (Rx) n'est pas celle habituellement utilisée. En effet, habituellement un module de réception comprend une photodiode et une bascule électronique de décision chargée de fournir un signal électrique binaire synchronisé sur l'horloge extraite du signal fourni par la photodiode. Usuellement un module de réception individuel traite un seul et unique canal optique à la fois. Plusieurs modules de réception sont donc généralement mis en parallèle en sortie d'un démultiplexeur alimenté en multiplex spectraux par un multiplexeur d'insertion/extraction MIE, et les sorties respectives des bascules de décision alimentent un commutateur de trafic SE. Ici, afin de simplifier les dessins, un module de réception (Rx) comprend un démultiplexeur couplé à plusieurs modules de réception individuels.

Le noeud d'accès H peut également comporter des moyens de mémorisation, tels que des mémoires électroniques, destinés à mémoriser le trafic, au moins de façon temporaire, et un commutateur électronique, de type Ethernet ou IP, équipé de moyens de conversion de type O/E/O (« Optique /Electrique / Optique ») de façon à pouvoir accéder à l'intégralité du trafic circulant dans le réseau (ici en anneau). Un tel commutateur électronique est généralement appelé « concentrateur ».

Comme indiqué précédemment, le module d'émission Tx de chaque noeud Nᵢ comporte un modulateur optique local (MOD) alimenté en données à transmettre par un circuit électronique et chargé de moduler des lumières de longueurs d'onde différentes avec ces données afin de délivrer des signaux optiques modulés sur sa sortie qui sont ensuite multiplexés pour constituer des multiplex spectraux. En raison de la définition donnée ci-avant, le modulateur optique local (MOD) du module d'émission Tx est constitué de plusieurs modulateurs (sous-parties) indépendants (ou individuels) chargés chacun de moduler la lumière délivrée par la source qui lui est associée afin d'alimenter les entrées d'un multiplexeur dont la sortie alimente le multiplexeur d'insertion/extraction MIE couplé à la fibre optique FO.

Selon l'invention, chaque noeud Nᵢ est raccordé aux noeuds voisins Nᵢ₋₁ et Nᵢ₊₁ par une fibre optique additionnelle. Dans ce qui suit, on appelle « première portion (PF1) » la portion de la fibre optique additionnelle qui relie un noeud Nᵢ au noeud Nᵢ₋₁ qui le précède et « seconde portion (PF2) » la portion de la fibre optique additionnelle qui relie un noeud Nᵢ au noeud Nᵢ₊₁ qui le suit.

Par ailleurs, toujours selon l'invention, chaque noeud Nᵢ comprend des moyens de couplage chargés de coupler le modulateur optique local (MOD), d'une part, à une première portion (PF1) de la fibre optique additionnelle, dans laquelle circule au moins une lumière d'une longueur d'onde choisie, délivrée par une source de lumière appartenant à un premier noeud distant du réseau, et d'autre part, à au moins une autre source de lumière délivrant au moins une lumière présentant cette longueur d'onde choisie. En raison de la définition donnée ci-avant, chaque sous-partie du modulateur optique local (MOD) est couplée à la première portion (PF1) de la fibre optique additionnelle.

On se réfère maintenant à la figure 2 pour décrire un premier exemple de réalisation d'un noeud de communication Nᵢ selon l'invention.

Ce premier exemple de réalisation appartient à une première famille de noeuds comprenant, d'une part, au moins une source de lumière locale Sⱼ qui constitue l'autre source de lumière, évoquée ci-avant, et d'autre part, des moyens de couplage chargés de coupler son modulateur optique local MOD (en fait chacune de ses sous-parties) soit à la source de lumière locale Sⱼ lorsqu'elle fonctionne normalement, soit à la première portion PF1 (de la fibre optique additionnelle) lorsque la source de lumière locale Sⱼ ne fonctionne pas.

Dans l'exemple illustré sur la figure 2, le module d'émission Tx du noeud Nᵢ comprend quatre sources de lumière S1 à S4 (j = 1 à 4), de type laser mono-longueur d'onde délivrant une lumière de longueur d'onde fixe. Les quatre sources locales Sj délivrent donc des lumières présentant quatre longueurs d'onde λ1 à λ4 différentes. Mais, l'indice j peut prendre n'importe quelle valeur non nulle (j>0).

Par ailleurs, les moyens de couplage sont ici chargés de coupler chaque source de lumière locale Sj à au moins une seconde portion PF2 de la fibre optique additionnelle afin d'y insérer chaque lumière présentant l'une des longueurs d'onde λj.

Le couplage du noeud Nᵢ à la première portion PF1 de la fibre optique additionnelle s'effectue au moyen d'un démultiplexeur M1 comportant une entrée (raccordée à la première portion PF1 afin d'être alimentée en lumières multiplexées en longueurs d'onde λj provenant du noeud précédent Nᵢ₋₁₎ et autant de sorties qu'il y a de longueurs d'onde λⱼ différentes utilisées (ici 4).

Il est important de noter que les longueurs d'onde λj des lumières délivrées par les sources locales Sj du noeud Nᵢ sont identiques à celles que présentent les lumières qui circulent dans la première portion PF1 de la fibre optique additionnelle et qui proviennent du noeud voisin Nᵢ₋₁.

Le couplage du noeud Nᵢ à la seconde portion PF2 de la fibre optique additionnelle s'effectue au moyen d'un multiplexeur M2 comportant des entrées raccordées respectivement aux sorties des sources locales Sj et une sortie (raccordée à la seconde portion PF2 afin de l'alimenter en lumières multiplexées en longueurs d'onde λⱼ).

Les moyens de couplage comprennent également des aiguilleurs Aj (ici A1 à A4) dédiés chacun à l'aiguillage d'une lumière présentant une longueur d'onde λj.

Chaque aiguilleur Aj est ici de type 2x1 et comprend :
- une première entrée raccordée à l'une des sorties du démultiplexeur M1, de manière à être alimentée en lumière présentant l'une des longueurs d'onde λj,
- une seconde entrée raccordée à la sortie de la source locale Sj qui délivre une lumière présentant la même longueur d'onde λj que celle qui parvient au niveau de sa première entrée, et
- une sortie qui est raccordée au modulateur optique local MOD (en fait à l'une de ses sous-parties) et qui peut être couplée à l'une ou l'autre des première et seconde entrées, selon que la source locale Sj ne fonctionne pas ou bien fonctionne.

Avec cet agencement, chaque noeud Nᵢ du réseau RA reçoit sur son démultiplexeur M1 les (quatre) lumières de longueurs d'onde λj qui lui sont transmises via la première portion PF1 par les (quatre) sources Sjᵢ₋₁ implantées dans le noeud précédent Nᵢ₋₁, et transmet au noeud qui le suit Nᵢ₊₁ les (quatre) lumières de longueurs d'onde λj qui sont générées par ses (quatre) sources locales Sjᵢ, via son multiplexeur M2 et la seconde portion PF2. La fibre optique additionnelle est ici de type unidirectionnel.

Ainsi, lorsque les sources locales Sj du noeud Nᵢ fonctionnent, ses aiguilleurs Aj couplent tous leur seconde entrée à leur sortie, si bien que le modulateur MOD est alimenté par les lumières délivrées par lesdites sources locales Sj. Si l'une des sources locales Sj du noeud Nᵢ, par exemple S4, ne fonctionne plus, l'aiguilleur A4 correspondant couple sa première entrée à sa sortie afin que le modulateur MOD soit alimenté par la lumière de longueur d'onde λ4 délivrée par le démultiplexeur M1 et provenant de la source S4ᵢ₋₁ du noeud précédent Nᵢ₋₁, tandis que les autres aiguilleurs A1 à A3 couplent tous leur seconde entrée à leur sortie afin que le modulateur MOD soit alimenté par les lumières de longueurs d'onde λ1 à λ3 délivrées par les sources locales S1 à S3.

Chaque source locale Sjᵢ de chaque noeud Nᵢ est donc protégée par la source locale Sjᵢ₋₁ du noeud Nᵢ₋₁ qui le précède.

Dans l'exemple illustré sur la figure 2, les aiguilleurs Aj sont réalisés sous la forme d'un commutateur optique de type 2x1. Mais, chaque aiguilleur Aj peut être réalisé sous la forme d'une combinaison de portes optiques.

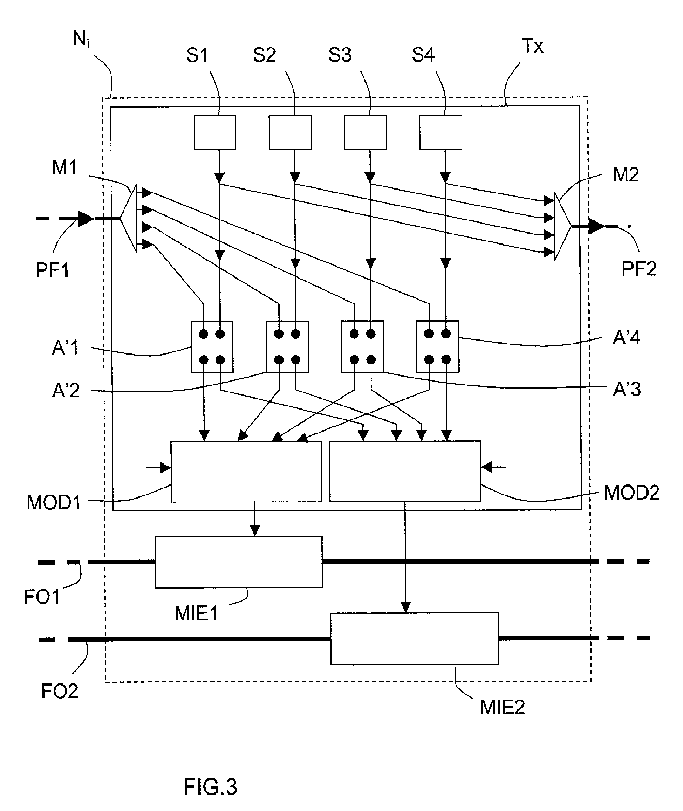

On se réfère maintenant à la figure 3 pour décrire un deuxième exemple de réalisation d'un noeud de communication Nᵢ selon l'invention.

Ce deuxième exemple de réalisation appartient également à la première famille de noeuds. Il s'agit en fait d'une variante du premier exemple de réalisation décrit ci-avant en référence à la figure 2.

Ce qui différencie ce deuxième exemple de réalisation du premier, c'est le fait que le modulateur MOD comprend deux parties MOD1 et MOD2 respectivement dédiées à la modulation locale protégée et à la modulation locale non protégée.

La première partie MOD1 (en fait chacune de ses sous-parties) alimente un premier multiplexeur d'insertion/extraction MIE1 qui est couplé à une première fibre optique FO1. La seconde partie MOD2 (en fait chacune de ses sous-parties) alimente un second multiplexeur d'insertion/extraction MIE2 qui est couplé à une seconde fibre optique (de protection) FO2.

La fibre optique additionnelle est ici également de type unidirectionnel.

En raison de cette modification, chaque aiguilleur A'j est de type 2x2, et comprend non seulement des première et seconde entrées, comme l'aiguilleur Aj, mais également des première et seconde sorties respectivement raccordées aux deux parties MOD1 et MOD2 du modulateur MOD (en fait à chacune de leurs sous-parties) et pouvant être couplées à l'une ou l'autre des première et seconde entrées, selon que la source locale correspondante Sj ne fonctionne pas ou bien fonctionne.

Ce mode de réalisation est adapté aux réseaux RA dans lesquels on utilise simultanément des trafics protégés et non protégés. Lorsque toutes les sources locales Sjᵢ d'un noeud Nᵢ et les sources (distantes) Sjᵢ₋₁ du noeud précédent Nᵢ₋₁ fonctionnent normalement, on alimente les deux parties MOD1 et MOD2 du modulateur MOD avec les lumières provenant respectivement des sources locales Sjᵢ et des sources (distantes) Sjᵢ₋₁ du noeud précédent Nᵢ₋₁. Si l'une des sources locales Sjᵢ ou distantes Sjᵢ₋₁ ne fonctionne pas, la lumière qu'elle délivre est substituée par celle délivrée par la source distante Sjᵢ₋₁ ou locale Sjᵢ grâce à l'aiguilleur A'jᵢ du noeud Nᵢ correspondant.

Chaque source locale Sjᵢ de chaque noeud Nᵢ est donc protégée par la source locale Sjᵢ₋₁ du noeud Nᵢ₋₁ qui le précède.

Cela n'est intéressant que si chaque aiguilleur A'j (2x2) est de type dit « crossbar », c'est-à-dire pouvant être placé soit dans un premier état dans lequel la première entrée est raccordée à la première sortie et la seconde entrée est raccordée à la seconde sortie, soit dans un second état dans lequel la première entrée est raccordée à la seconde sortie et la seconde entrée est raccordée à la première sortie.

Dans l'exemple illustré sur la figure 3, les aiguilleurs A'j sont réalisés sous la forme d'un commutateur optique de type 2x2. Mais, chaque aiguilleur A'j peut être réalisé sous la forme d'une combinaison de portes optiques.

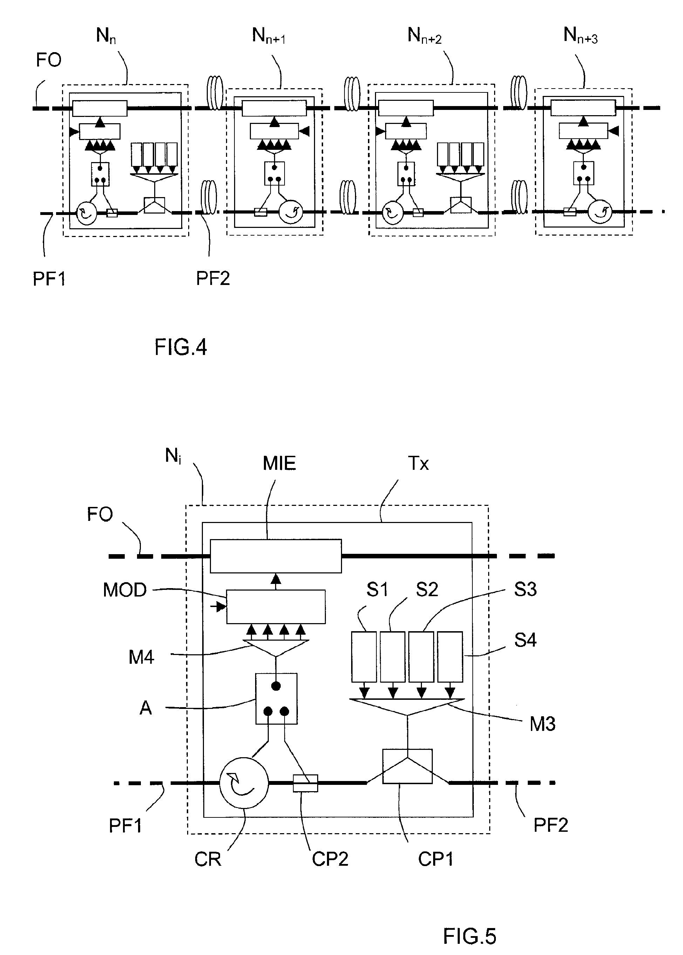

On se réfère maintenant aux figures 4 à 6 pour décrire des troisième et quatrième exemples de réalisation de noeud de communication Nᵢ selon l'invention.

Plus précisément, on a représenté sur la figure 4 une partie d'un réseau RA équipé d'une alternance de troisième et quatrième exemples de réalisation de noeud Nᵢ. Mais, on peut envisager une variante de réseau dans laquelle tous les noeuds sont identiques au troisième exemple de réalisation illustré sur la figure 5.

La fibre optique additionnelle est ici de type bidirectionnel.

Le troisième exemple de réalisation, illustré sur la figure 5, appartient également à la première famille de noeuds.

Dans cet exemple, les sorties des (quatre) sources locales Sj sont respectivement couplées aux (quatre) entrées d'un multiplexeur M3 dont la sortie est notamment couplée, au moyen d'un premier coupleur CP1 de type 1x2, à la seconde portion PF2 de la fibre optique additionnelle afin de l'alimenter en lumières multiplexées en longueurs d'onde.

Par ailleurs, le modulateur MOD (en fait ses sous-parties) est alimenté en lumières démultiplexées, présentant les mêmes longueurs d'onde λj que celles des lumières délivrées par les sources locales Sj, par les sorties d'un démultiplexeur M4 comportant une entrée raccordée à la sortie d'un aiguilleur A de type 2x1.

Cet aiguilleur A est du même type que celui présenté ci-avant en référence à la figure 2. Il peut également être remplacé par une combinaison de portes optiques.

L'aiguilleur A comprend des première et seconde entrées raccordées respectivement à l'une des deux sorties d'un deuxième coupleur CP2 et à l'une des sorties d'un circulateur CR.

Le deuxième coupleur CP2 comprend une entrée couplée à l'une des deux sorties du premier coupleur CP1, une première sortie couplée à la première entrée de l'aiguilleur A et une seconde sortie couplée à une entrée du circulateur CR.

Le circulateur CR comprend une sortie (fonctionnellement monodirectionnelle) raccordée à la seconde entrée de l'aiguilleur A, une entrée (fonctionnellement monodirectionnelle) couplée à la deuxième sortie du deuxième coupleur CP2, et une entrée/sortie (bidirectionnelle) raccordée à la première portion PF1 de la fibre optique additionnelle et pouvant être couplée à son entrée ou à sa sortie. Ainsi, les lumières multiplexées (de longueurs d'onde λ1 à λ4) qui parviennent sur son entrée/sortie et qui proviennent d'un noeud précédent (pas obligatoirement voisin) sont délivrées sur sa sortie afin d'alimenter la deuxième entrée de l'aiguilleur A et les lumières multiplexées (de longueurs d'onde λ1 à λ4) qui parviennent sur son entrée et qui proviennent des sources locales Sj sont délivrées sur son entrée/sortie afin d'alimenter la première portion PF1 de la fibre optique additionnelle.

Le premier coupleur CP1 est par exemple un répartiteur optique 1x2 délivrant 60% de la puissance qu'il reçoit sur sa première sortie (couplée à la seconde portion PF2 de la fibre optique additionnelle) et les 40% restant de la puissance qu'il reçoit sur sa seconde sortie (couplée à l'entrée du deuxième coupleur CP2).

Avec cet agencement, lorsque les sources locales Sj du noeud Nᵢ fonctionnent, son aiguilleur A couple sa première entrée à sa sortie, si bien que le modulateur MOD est alimenté par les lumières délivrées par lesdites sources locales Sj via le démultiplexeur M4. Si l'une des sources locales Sj du noeud Nᵢ, par exemple S1, ne fonctionne plus, l'aiguilleur A couple sa seconde entrée à sa sortie afin que le modulateur MOD soit alimenté par les lumières de longueur d'onde λ1 à λ4 qui sont délivrées par la première portion PF1 de la fibre optique additionnelle et qui proviennent soit du noeud précédent Nᵢ₋₁ s'il est du même type que le sien (troisième exemple), soit d'un noeud Nᵢ₋₂ du même type que le sien (troisième exemple) et placé deux positions avant lui, si c'est un noeud d'un autre type (quatrième exemple) qui le précède (situation illustrée sur la figure 4).

La fibre optique additionnelle étant ici de type bidirectionnel, il peut survenir un effet de rétro-diffusion susceptible d'induire une diaphonie (ou « crosstalk ») entre les canaux multiplexés des lumières de longueurs d'onde différentes. Pour éviter que cela ne survienne, ce qui occasionnerait une dégradation de la puissance, il est possible de décaler de 0,1 nm à 0,3 nm les longueurs d'onde des lumières délivrées par les sources appartenant à des noeuds voisins de même type. Ce décalage doit être choisi suffisamment petit pour permettre un filtrage correct dans le réseau.

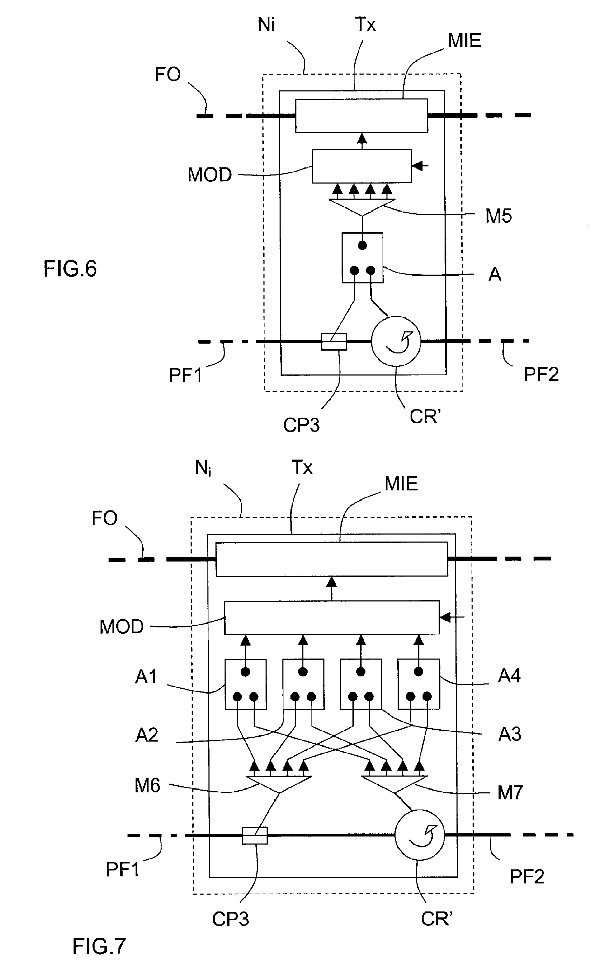

Le quatrième exemple de réalisation, illustré sur la figure 6, appartient à une seconde famille de noeuds comprenant des moyens de couplage chargés de coupler son modulateur optique local MOD soit à la première portion PF1 de la fibre optique additionnelle lorsque la lumière délivrée par la source du premier noeud (précédent Nᵢ₋₁) circule dedans, soit à la seconde portion PF2 de la fibre optique additionnelle dans laquelle circule au moins une lumière présentant la longueur d'onde choisie, délivrée par une source appartenant à un second noeud (suivant Nᵢ₊₁) et constituant l'autre source, lorsque la lumière délivrée par la source du premier noeud (précédent Nᵢ₋₁) ne circule pas dans la première portion PF1 de la fibre optique additionnelle.

Les noeuds Nᵢ de ce type ne comportent donc pas de source de lumière locale Sj, mais sont alimentés par les sources de lumière Sjᵢ₋₁ et Sjᵢ₊₁, des noeuds Nᵢ₋₁ et Nᵢ₊₁ qui les encadrent.

Dans l'exemple de réalisation illustré sur la figure 6, le modulateur MOD du noeud Nᵢ est alimenté en lumières démultiplexées, présentant les longueurs d'onde λj, par les sorties d'un démultiplexeur M5 comportant une entrée raccordée à la sortie d'un aiguilleur A de type 2x1.

Cet aiguilleur A est du même type que celui présenté ci-avant en référence à la figure 2. Il peut également être remplacé par une combinaison de portes optiques.

L'aiguilleur A comprend des première et seconde entrées raccordées respectivement à l'une des deux sorties d'un coupleur CP3 et à la sortie d'un circulateur CR'.

Le coupleur CP3 comprend une entrée couplée à la première portion PF1 de la fibre optique additionnelle, une première sortie couplée à la première entrée de l'aiguilleur A et une seconde sortie couplée à une entrée du circulateur CR'.

Le circulateur CR' comprend une sortie (fonctionnellement monodirectionnelle) raccordée à la seconde entrée de l'aiguilleur A, une entrée (fonctionnellement monodirectionnelle) couplée à la deuxième sortie du coupleur CP3, et une entrée/sortie (bidirectionnelle) raccordée à la seconde portion PF2 de la fibre optique additionnelle et pouvant être couplée à son entrée ou à sa sortie. Ainsi, les lumières multiplexées (de longueurs d'onde λ1 à λ4) qui parviennent sur son entrée/sortie et qui proviennent d'un noeud suivant Nᵢ₊₁ (troisième exemple) sont délivrées sur sa sortie afin d'alimenter la deuxième entrée de l'aiguilleur A et les lumières multiplexées (de longueurs d'onde λ1 à λ4) qui parviennent sur son entrée et qui proviennent d'un noeud précédent Nᵢ₋₁ (troisième exemple) sont délivrées sur son entrée/sortie afin d'alimenter la seconde portion PF2 de la fibre optique additionnelle.

Le coupleur CP3 est par exemple un répartiteur optique 1x2 délivrant 80% de la puissance qu'il reçoit sur sa seconde sortie (couplée à la seconde portion PF2 de la fibre optique additionnelle via le circulateur CR') et les 20% restant de la puissance qu'il reçoit sur sa première sortie (couplée à la première entrée de l'aiguilleur A).

Avec cet agencement, lorsque les sources Sjᵢ₋₁ du noeud précédent Nᵢ₋₁ fonctionnent, l'aiguilleur A du noeud Nᵢ couple sa première entrée à sa sortie, si bien que le modulateur MOD est alimenté par les lumières délivrées par lesdites sources Sjᵢ₋₁ du noeud précédent Nᵢ₋₁ via la première portion PF1 de la fibre optique additionnelle et le démultiplexeur M5. Si l'une des sources locales Sjᵢ₋₁ du noeud précédent Nᵢ₋₁, par exemple S1, ne fonctionne plus, l'aiguilleur A du noeud Nᵢ couple sa seconde entrée à sa sortie afin que le modulateur MOD soit alimenté par les lumières de longueur d'onde λ1 à λ4 qui sont délivrées par les sources Sjᵢ₊₁ du noeud suivant Nᵢ₊₁ via la seconde portion PF2 de la fibre optique additionnelle et le démultiplexeur M5.

En raison des agencements des troisième et quatrième exemples de réalisation, respectivement illustrés sur les figures 5 et 6, les sources Sj ne sont pas protégées de façon individuelle. Lorsque l'une d'entre elles ne fonctionne plus localement ou dans un noeud voisin, elles doivent être toutes substituées par les sources équivalentes d'un noeud voisin.

Pour remédier à cet inconvénient on peut par exemple utiliser les adaptations illustrées sur la figure 7. Il est important de noter que la figure 7 illustre un cinquième exemple de réalisation de noeud qui est une variante du quatrième exemple décrit précédemment en référence à la figure 6. Mais, les adaptations de cette variante s'applique de la même façon au troisième exemple décrit précédemment en référence à la figure 5 (et plus précisément aux éléments qui constituent sa partie de gauche couplée au modulateur optique local MOD et à la première portion PF1 de la fibre optique additionnelle).

On conserve ici le premier CP3 (ou CP2) coupleur et le circulateur CR' (ou CR) respectivement raccordés aux première PF1 et seconde PF2 portions de la fibre optique additionnelle et raccordés l'un à l'autre. L'adaptation consiste à prévoir des premier M6 et second M7 démultiplexeurs et (quatre) aiguilleurs Aj de type 2x1.

Plus précisément, chaque aiguilleur Aj est dédié à l'une des (quatre) longueurs d'onde λj et comprend des première et seconde entrées et une sortie raccordée au modulateur optique local MOD afin de l'alimenter avec la lumière démultiplexée de longueur d'onde λj reçue sur l'une des ses deux entrées.

Le premier démultiplexeur M6 comprend une entrée raccordée à la première sortie du coupleur CP3 (ou CP2) et (quatre) sorties raccordées respectivement aux premières entrées des (quatre) aiguilleurs Aj. Le second démultiplexeur M7 comprend une entrée raccordée à la sortie du circulateur CR' (ou CR) et (quatre) sorties raccordées respectivement aux secondes entrées des (quatre) aiguilleurs Aj. Les sorties des premier M6 et second M7 démultiplexeurs, qui sont raccordées aux première et seconde entrées d'un même aiguilleur Aj, alimentent ce dernier avec des lumières présentant la même longueur d'onde (ou sensiblement la même pour éviter la diaphonie).

Avec cet agencement, lorsque les sources Sjᵢ₋₁ du noeud précédent Nᵢ₋1 fonctionnent, les aiguilleurs Aj du noeud Nᵢ couplent tous leur première entrée à leur sortie, si bien que le modulateur MOD est alimenté par les lumières délivrées par lesdites sources Sjᵢ₋₁ du noeud précédent Nᵢ₋₁ via la première portion PF1 de la fibre optique additionnelle et le démultiplexeur M6. Si l'une des sources locales Sjᵢ₋₁ du noeud précédent Nᵢ₋₁, par exemple S1ᵢ₋₁, ne fonctionne plus, l'aiguilleur A1ᵢ du noeud Nᵢ couple sa seconde entrée à sa sortie afin que le modulateur MOD soit alimenté par la lumière de longueur d'onde λ1 qui est délivrée par la source S1ᵢ₊₁ du noeud suivant Nᵢ₊₁ via la seconde portion PF2 de la fibre optique additionnelle et le démultiplexeur M7, et les aiguilleurs A2ᵢ à A4ᵢ du noeud Nᵢ couplent leur première entrée à leur sortie afin que le modulateur MOD soit alimenté par les lumières délivrées par les sources S2ᵢ₋₁ à S4ᵢ₋₁ du noeud précédent Nᵢ₋₁ via la première portion PF1 de la fibre optique additionnelle et le démultiplexeur M6.

On obtient ainsi une protection individualisée de chaque source de lumière Sj.

Les aiguilleurs Aj de ce cinquième exemple de réalisation sont du même type que ceux présentés ci-avant en référence à la figure 2. Ils peuvent également être remplacés par une combinaison de portes optiques.

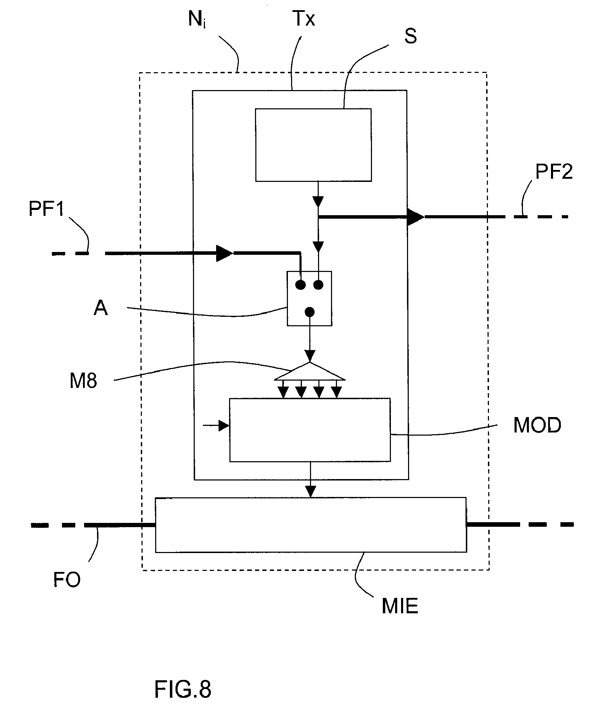

On se réfère maintenant à la figure 8 pour décrire un sixième exemple de réalisation d'un noeud de communication Nᵢ selon l'invention.

Ce sixième exemple de réalisation appartient également à la première famille de noeuds. Il peut être considéré comme une variante du premier exemple de réalisation décrit ci-avant en référence à la figure 2.

Ce qui différencie ce deuxième exemple de réalisation du premier, c'est principalement le fait qu'il ne comprend qu'une unique source de lumière locale S de type multi-longueurs d'onde délivrant des lumières multiplexées en longueurs d'onde sur une sortie.

La sortie de la source S est couplée, d'une part, à la seconde portion PF2 de la fibre optique additionnelle, et d'autre part, à l'une des deux entrées d'un aiguilleur A de type 2x1, dont l'autre entrée est couplée à la première portion PF1 de la fibre optique additionnelle et dont la sortie est raccordée à l'entrée d'un démultiplexeur M8, afin de l'alimenter en lumières multiplexées de longueurs d'onde différentes λj, et peut être couplée à l'une ou l'autre des première et seconde entrées, selon que la source locale S ne fonctionne pas ou bien fonctionne.

Cet aiguilleur A est du même type que celui présenté ci-avant en référence à la figure 2. Il peut également être remplacé par une combinaison de portes optiques.

Le démultiplexeur M8 comprend autant de sorties que de longueurs d'onde différentes λj, chaque sortie étant raccordée au modulateur optique local MOD afin de l'alimenter en lumière démultiplexée présentant une longueur d'onde déterminée.

Avec cet agencement, chaque noeud Nᵢ du réseau RA reçoit sur la première entrée de son aiguilleur A les (quatre) lumières de longueurs d'onde λj qui lui sont transmises via la première portion PF1 par la source Sᵢ₋₁ implantée dans le noeud précédent Nᵢ₋₁, et transmet au noeud qui le suit Nᵢ₊₁ les (quatre) lumières de longueurs d'onde λj qui sont générées par sa source locale Sᵢ, via la seconde portion PF2. La fibre optique additionnelle est ici de type unidirectionnel.

Ainsi, lorsque la source locale S du noeud Nᵢ fonctionne, son aiguilleur A couple sa seconde entrée à sa sortie, si bien que son modulateur local MOD est alimenté par les lumières délivrées par ladite source locale S. Si la source locale S du noeud Nᵢ ne fonctionne plus, son aiguilleur A couple sa première entrée à sa sortie afin que le modulateur MOD soit alimenté par les lumières de longueurs d'onde λj qui proviennent de la source S du noeud précédent Nᵢ₋₁ via la première portion PF1 de la fibre optique additionnelle.

La source locale Sᵢ de chaque noeud Nᵢ est donc protégée par la source locale Sᵢ₋₁ du noeud Nᵢ₋₁ qui le précède.

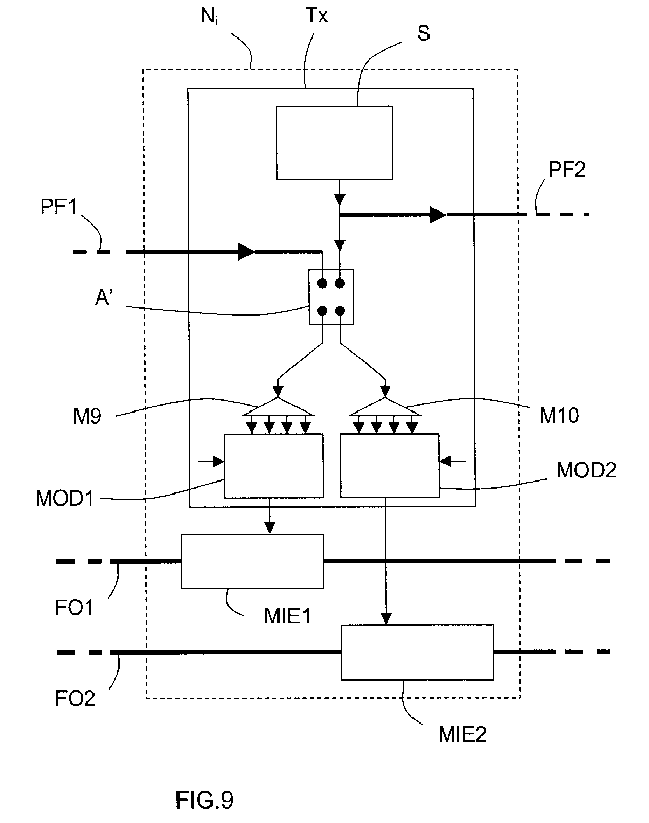

On se réfère maintenant à la figure 9 pour décrire un septième exemple de réalisation d'un noeud de communication Nᵢ selon l'invention.

Ce septième exemple de réalisation appartient également à la première famille de noeuds. Il s'agit en fait d'une variante du sixième exemple de réalisation décrit ci-avant en référence à la figure 8.

Ce qui différencie ce septième exemple de réalisation du sixième, c'est le fait que le modulateur MOD comprend deux parties MOD1 et MOD2 respectivement dédiées à la modulation locale protégée et à la modulation locale non protégée.

La première partie MOD1 alimente un premier multiplexeur d'insertion/extraction MIE1 qui est couplé à une première fibre optique FO1. La seconde partie MOD2 alimente un second multiplexeur d'insertion/extraction MIE2 qui est couplé à une seconde fibre optique (de protection) FO2.

La fibre optique additionnelle est ici également de type unidirectionnel.

En raison de cette modification, l'aiguilleur A' est de type 2x2, et comprend non seulement des première et seconde entrées, comme l'aiguilleur A de la figure 8, mais également des première et seconde sorties, respectivement raccordées à des premier M9 et second M10 démultiplexeurs dont les sorties sont respectivement couplées aux première MOD1 et seconde MOD2 parties du modulateur MOD, et pouvant être couplées à l'une ou l'autre des première et seconde entrées, selon que la source locale S ne fonctionne pas ou bien fonctionne.

Comme indiqué précédemment, ce mode de réalisation est adapté aux réseaux RA dans lesquels on utilise simultanément des trafics protégés et non protégés. Lorsque la source locale Sᵢ d'un noeud Nᵢ et la source (distante) Sᵢ₋₁ du noeud précédent Nᵢ₋₁ fonctionne normalement, on alimente les deux parties MOD1 et MOD2 du modulateur MOD avec les lumières provenant respectivement de la source locale Sᵢ et de la source (distante) Sᵢ₋₁ du noeud précédent Nᵢ₋₁. Si la source locale Sᵢ ou distante Sᵢ₋₁ ne fonctionne pas, la lumière qu'elle aurait dû délivrer est substituée par celle délivrée par la source distante Sᵢ₋₁ ou locale Sᵢ grâce à l'aiguilleur A'ᵢ du noeud Nᵢ correspondant.

La source locale Sᵢ de chaque noeud Nᵢ est donc protégée par la source locale Sᵢ₋₁ du noeud Nᵢ₋₁ qui le précède.

De nouveau, cela n'est intéressant que si l'aiguilleur A'ᵢ (2x2) est de type crossbar.

L'aiguilleur A' est du même type que celui présenté ci-avant en référence à la figure 3. Il peut également être remplacé par une combinaison de portes optiques.

Il ressort de la description précédente de différents exemples de réalisation d'un noeud de communication selon l'invention plusieurs avantages :
- il ne faut qu'une fibre optique additionnelle pour assurer le partage et la protection des sources de lumières,
- toutes les sources peuvent être protégées séparément ou individuellement, sans qu'il faille prévoir des sources de protection complémentaires et quel que soit le nombre de noeuds du réseau,
- la protection est adaptée aux ruptures de fibre,
- certains exemples de réalisation permettent de limiter le nombre de composants du réseau, et notamment le nombre de sources de lumière et de (dé)multiplexeurs. Cela peut permettre de réduire la puissance consommée, les coûts de fabrication et d'exploitation, et/ou l'encombrement général.

L'invention ne se limite pas aux modes de réalisation de noeud de communication et de réseau optique à multiplexage de longueurs d'onde décrits ci-avant, seulement à titre d'exemple, mais elle englobe toutes les variantes que pourra envisager l'homme de l'art dans le cadre des revendications ci-après.

Ainsi, dans ce qui précède on a décrit des exemples de réalisation de noeuds dans lesquels le nombre de longueurs d'onde utilisés était égal à quatre (4). Mais, l'invention n'est pas limitée à) ce nombre. Elle s'applique en effet à tout nombre de longueurs d'onde supérieur ou égal à un (1).

## Revendications

1. Noeud de communication (Nᵢ) pour un réseau optique à multiplexage de longueurs d'onde (RA), ledit noeud (Nᵢ) comprenant des moyens de modulation locaux (MOD) propres à moduler au moins une lumière de longueur d'onde choisie, délivrée par une source (Sj), de manière à délivrer des signaux optiques modulés, **caractérisé en ce qu'**il comprend des moyens de couplage agencés pour coupler lesdits moyens de modulation locaux (MOD) i) à une première portion de fibre optique (PF1) dans laquelle circule au moins une lumière d'une longueur d'onde choisie, délivrée par une source appartenant à un premier noeud distant dudit réseau, et ii) à au moins une autre source délivrant au moins une lumière présentant cette longueur d'onde choisie.

2. Noeud de communication selon la revendication 1, **caractérisé en ce qu'**il comprend au moins une source (Sj, S) de lumière locale constituant ladite autre source, et **en ce que** lesdits moyens de couplage sont agencés pour coupler lesdits moyens de modulation locaux (MOD) soit à ladite source de lumière locale (Sj, S) lorsqu'elle fonctionne normalement, soit à ladite première portion de fibre optique (PF1) lorsque ladite source de lumière locale (Sj, S) ne fonctionne pas.

3. Noeud de communication selon la revendication 2, **caractérisé en ce que** lesdits moyens de couplage sont agencés pour coupler chaque source de lumière locale (Sj, S) à au moins une seconde portion de fibre optique (PF2) couplée à un second noeud distant (Nᵢ₋₁₎ dudit réseau.

4. Noeud de communication selon la revendication 3, **caractérisé en ce qu'**il comprend i) des premiers moyens de multiplexage (M1) raccordés à ladite première portion de fibre optique (PF1) et agencés pour délivrer sur au moins deux sorties des lumières présentant des longueurs d'onde différentes, ii) au moins deux sources de lumière locale (Sj) agencées chacune sous la forme d'un laser mono-longueur d'onde propre à délivrer sur une sortie une lumière présentant une longueur d'onde identique à l'une de celles présentées par les lumières délivrées sur les sorties desdits premiers moyens de multiplexage (M1), et iii) des seconds moyens de multiplexage (M2) comprenant des entrées raccordées respectivement aux sorties desdites sources de lumière locales (Sj) et une sortie raccordée à ladite seconde portion de fibre optique (PF2) de manière à l'alimenter en lumières multiplexées en longueurs d'onde, et **en ce que** lesdits moyens de couplage comprennent des aiguilleurs (Aj ;A'j) dédiés chacun à l'aiguillage d'une lumière présentant une longueur d'onde et comprenant chacun une première entrée raccordée à l'une des sorties desdits premiers moyens de multiplexage (M1), une seconde entrée raccordée à la sortie de la source de lumière locale (Sj) délivrant une lumière présentant la même longueur d'onde que celle de la lumière parvenant au niveau de ladite première entrée, et au moins une sortie propre à être couplée à l'une ou l'autre desdites première et seconde entrées et raccordée auxdits moyens de modulation (MOD).

5. Noeud de communication selon la revendication 4, **caractérisé en ce que** lesdits moyens de modulation (MOD) comprennent une première partie (MOD1) dédiée à la modulation locale protégée et une seconde partie (MOD2) dédiée à la modulation locale non protégée, et **en ce que** chaque aiguilleur (A'j) comprend une première sortie raccordée à l'une des entrées de la première partie (MOD1) des moyens de modulation et une seconde sortie raccordée à l'une des entrées de la seconde partie (MOD2) des moyens de modulation, lesdites première et seconde sorties de chaque aiguilleur (A'j) pouvant être raccordées à la première ou à la seconde entrée de cet aiguilleur (A'j).

6. Noeud de communication selon la revendication 3, **caractérisé en ce qu'**il comprend i) des moyens de multiplexage (M8) comprenant une entrée et au moins deux sorties raccordées auxdits moyens de modulation (MOD) de manière à les alimenter en lumières présentant des longueurs d'onde différentes, et ii) une source de lumière locale de type multi-longueurs d'onde (S) agencée pour délivrer des lumières multiplexées en longueurs d'onde sur une sortie raccordée notamment à ladite seconde portion de fibre optique (PF2), et **en ce que** lesdits moyens de couplage comprennent un aiguilleur (A) comprenant une première entrée raccordée à ladite première portion de fibre optique (PF1), une seconde entrée raccordée à la sortie de ladite source de lumière locale (S), et une sortie pouvant être raccordée à sa première ou à sa seconde entrée et raccordée à l'entrée desdits moyens de multiplexage (M8) pour l'alimenter en lumières multiplexées en longueurs d'onde.

7. Noeud de communication selon la revendication 3, **caractérisé en ce qu'**il comprend i) des premiers moyens de multiplexage (M9) comprenant une entrée et au moins deux sorties raccordées à une première partie (MOD1) desdits moyens de modulation, dédiée à la modulation locale protégée, de manière à l'alimenter en lumières présentant des longueurs d'onde différentes, ii) des seconds moyens de multiplexage (M10) comprenant une entrée et au moins deux sorties raccordées à une seconde partie (MOD2) desdits moyens de modulation, dédiée à la modulation locale non protégée, de manière à l'alimenter en lumières présentant lesdites longueurs d'onde différentes, et iii) une source de lumière locale de type multi-longueurs d'onde (S) agencée pour délivrer des lumières multiplexées en longueurs d'onde sur une sortie raccordée notamment à ladite seconde portion de fibre optique (PF2), et **en ce que** lesdits moyens de couplage comprennent un aiguilleur (A') comprenant une première entrée raccordée à ladite première portion de fibre optique (PF1), une seconde entrée raccordée à la sortie de ladite source de lumière locale (S), une première sortie raccordée à l'entrée desdits premiers moyens de multiplexage (M9) pour l'alimenter en lumières multiplexées en longueurs d'onde, et une seconde sortie raccordée à l'entrée desdits seconds moyens de multiplexage (M10) pour l'alimenter en lumières multiplexées en longueurs d'onde, lesdites première et seconde sorties de l'aiguilleur (A') pouvant être raccordées à sa première ou à sa seconde entrée.

8. Noeud de communication selon la revendication 3, **caractérisé en ce qu'**il comprend i) au moins deux sources de lumière locale (Sj) agencées chacune sous la forme d'un laser mono-longueur d'onde propre à délivrer sur une sortie une lumière présentant une unique longueur d'onde, ii) des premiers moyens de multiplexage (M3) comprenant des entrées raccordées respectivement aux sorties desdites sources de lumière locales (Sj) et une sortie délivrant des lumières multiplexées en longueurs d'onde, et iii) des seconds moyens de multiplexage (M4) comprenant une entrée et des sorties raccordées auxdits moyens de modulation (MOD) pour les alimenter en lumières démultiplexées présentant les mêmes longueurs d'onde que celles des lumières délivrées par lesdites sources de lumière locales (Sj), et **en ce que** lesdits moyens de couplage comprennent i) un premier coupleur (CP1) comprenant une entrée raccordée à la sortie desdits premiers moyens de multiplexage (M3), une première sortie raccordée à cette entrée et à ladite seconde portion de fibre optique (PF2), et une seconde sortie, ii) un second coupleur (CP2) comprenant une entrée couplée à la seconde sortie dudit premier coupleur (CP1) et de première et seconde sorties raccordées à cette entrée, iii) un circulateur (CR) comprenant une entrée/sortie raccordée à ladite première portion de fibre optique (PF1), une entrée raccordée à la première sortie dudit premier coupleur (CP2) et pouvant être couplée à ladite entrée/sortie, et une sortie pouvant être couplée à ladite entrée/sortie, et iii) un aiguilleur (A) comprenant des première et seconde entrées couplées respectivement à la seconde sortie du second coupleur (CP2) et à la sortie du circulateur (CR), et une sortie propre à être couplée à l'une ou l'autre de ses première et seconde entrées et raccordée à l'entrée desdits seconds moyens de multiplexage (M4).

9. Noeud de communication selon la revendication 1, **caractérisé en ce que** lesdits moyens de couplage sont agencés pour coupler lesdits moyens de modulation locaux (MOD) soit à ladite première portion de fibre optique (PF1) lorsque la lumière délivrée par la source du premier noeud circule dedans, soit à une seconde portion de fibre optique (PF2) dans laquelle circule au moins une lumière présentant ladite longueur d'onde choisie, délivrée par une source appartenant à un second noeud distant dudit réseau (RA) et constituant ladite autre source, lorsque la lumière délivrée par la source du premier noeud ne circule pas dans ladite première portion de fibre optique (PF1).

10. Noeud de communication selon la revendication 9, **caractérisé en ce qu'**il comprend des moyens de multiplexage (M5) comprenant une entrée et des sorties raccordées auxdits moyens de modulation (MOD) pour les alimenter en lumières démultiplexées présentant des longueurs d'onde différentes, et **en ce que** lesdits moyens de couplage comprennent i) un coupleur (CP3) comprenant une entrée raccordée à ladite première portion de fibre optique (PF1) et de première et seconde sorties raccordées à cette entrée, et ii) un circulateur (CR') comprenant une entrée/sortie raccordée à ladite seconde portion de fibre optique (PF2), une entrée raccordée à la première sortie dudit coupleur (CP3) et pouvant être couplée à ladite entrée/sortie, et une sortie pouvant être couplée à ladite entrée/sortie, et iii) un aiguilleur (A) comprenant des première et seconde entrées raccordées respectivement à la seconde sortie du coupleur (CP3) et à la sortie du circulateur (CR'), et une sortie propre à être couplée à l'une ou l'autre de ses première et seconde entrées et raccordée à l'entrée desdits moyens de multiplexage (M5).

11. Noeud de communication selon la revendication 9, **caractérisé en ce que** lesdits moyens de couplage comprennent i) un coupleur (CP3) comprenant une entrée raccordée à ladite première portion de fibre optique (PF1) et de première et seconde sorties raccordées à cette entrée, ii) un circulateur (CR') comprenant une entrée/sortie raccordée à ladite seconde portion de fibre optique (PF2), une entrée raccordée à la première sortie dudit coupleur (CP3) et pouvant être couplée à ladite entrée/sortie, et une sortie pouvant être couplée à ladite entrée/sortie, iii) des premiers moyens de multiplexage (M6) comprenant une entrée raccordée à la seconde sortie du coupleur (CP3) et des sorties propres à délivrer des lumières démultiplexées présentant des longueurs d'onde différentes, iv) des seconds moyens de multiplexage (M7) comprenant une entrée raccordée à la sortie du circulateur (CR') et des sorties propres à délivrer des lumières démultiplexées présentant des longueurs d'onde différentes, et v) des aiguilleurs (Aj) dédiés chacun à l'aiguillage d'une lumière présentant une longueur d'onde et comprenant chacun une première entrée raccordée à l'une des sorties desdits premiers moyens de multiplexage (M6), une seconde entrée raccordée à l'une des sorties desdits seconds moyens de multiplexage (M7), et au moins une sortie propre à être couplée à l'une ou l'autre desdites première et seconde entrées et raccordée auxdits moyens de modulation (MOD).

12. Réseau optique à multiplexage de longueurs d'onde (RA), **caractérisé en ce qu'**il comprend au moins deux noeuds de communication (Nᵢ) selon l'une des revendications précédentes, raccordés entre eux par des première (PF1) et seconde (PF2) portions de fibre optique.
